# EUROPEAN PATENT SPECIFICATION

(11) **EP 0 923 874 B1**
(45) Date of publication and mention of the grant of the patent: **03.09.2003**
(21) Application number: 98203829.1
(22) Date of filing: 13.11.1998
(51) Int. Cl.: A23D 9/00, A23G 3/00, A23G 1/00

(54) **Non-temper, Low Lauric fat compositions**
Nicht-temperierte laurinarme Fettzusammensetzungen
Compositions de graisses non-tempérées à faible teneur en acide laurique

(30) Priority: 15.12.1997 EP 97203926
(43) Date of publication of application: 23.06.1999
(73) Proprietor: LODERS CROKLAAN B.V., 1520 AA Wormerveer (NL)
(72) Inventor: Cain, Frederick William, c/o Loders Croklaan B.V., 1521 AZ Wormerveer (NL); Loots, Arie, c/o Loders Croklaan B.V., 1521 AZ Wormerveer (NL); Zwikstra, Nico, c/o Loders Croklaan B.V., 1521 AZ Wormerveer (NL)
(74) Representative: Stevens, Ian Edward

(56) References cited:
- EP-A- 0 464 881
- EP-A- 0 502 697
- EP-A- 0 803 196
- WO-A-95/14392
- US-A- 5 424 090
- PATENT ABSTRACTS OF JAPAN vol. 098, no. 004, 31 March 1998 & JP 09 316484 A (FUJI OIL CO LTD), 9 December 1997

## Description

In the confectionery area many products are provided with a coating in order to obtain the desired product properties or to enable the use of a filling that can not be used without a coating. Many of these coatings are based on chocolate fats either being cocoa butter or a CBE (=cocoa butter equivalent). However cocoa butter or a CBE contains a lot of polymorphic fats of the SUS type (S=C16/C18 saturated fatty acid; U=Unsaturated C18 fatty acid). These fats have one major drawback ie because of its polymorphic nature the fats need to be subjected to a tempering treatment in order to bring the fats into the desired stable crystal form. This treatment is difficult and expensive and needs a lot of skills. But even then the products obtained often suffer from bloom after a certain storage time.

Well known coating fats that are applied for many years are based on trans fats (ie fats with a relatively high trans fatty acid content), such as Kaomel. Trans fats are nowadays considered as less healthy, reason enough to try to avoid its use if possible.

Kaomel is a midfraction of a mixture of lightly hardened liquid oils, such as cotton seed oil and soybean oil. Although Kaomel has a solid fat content (N-line) which makes it very suitable for application in coatings and it also is a non-temper fat, it thus has the drawback of its relatively high trans content.
An alternative for Kaomel was based on a range of fats with high lauric fat contents. Examples of these fats are palmkernel stearin fractions. However these fats are susceptible to a soapy rancidity and moreover these fats have limited compatability with cocoa butter which limits its possible use in compositions wherein cocoa butter is present.

Therefore we conducted a study in order to find new fat compositions that are useful coating fats, that are substantially free of trans fatty acids (ie < 10%, preferably < 5%, more preferably < 2%), that are non-temper fats ie they can be used without having to perform a tempering and still avoiding the occurrence of bloom. Moreover these fats are low in laurics which is a main advantage because this will avoid the occurrence of rancidity due to the presence of high amounts of lauric fatty acids residues. Moreover these fats can be made from non-tropical fat sources as well. This is in particular relevant in those countries were fats made from tropical fats are not appreciated or even not allowed.

Therefore our invention in the first instance concerns non-temper, low lauric fat blends suitable for confectionery coatings comprising saturated and mono unsaturated fatty acid residues, wherein the blends comprise:
10-30 wt% of C12:0 and/or C14:0 fatty acids, preferably 12-25 wt%, most preferably 14-20 wt%
20-80 wt% of total (C16:0+C18:0) fatty acids, preferably 30-60 wt%, most preferably 40-55 wt%
10-50 wt% of C18:1 fatty acid, preferably 15-35 wt%,
while the ratio C18:0/C16:0 fatty acids in the blend ranges from 2-7, preferably from 3-5

Above non-temper fats preferably display a solid fat content as defined by NMR-pulse:
N20 (non stab) > 50, preferably > 60, most preferably > 65
N35 (non stab) < 20, preferably < 15, most preferably < 10
while the ratio between N25 (stab) and N25 (non stab) ranges from 0.7-2.0, preferably from 0.8-1.5, most preferably from 0.9-1.2.

It is emphasized that the solid fat content of a fat can be measured by a prior art technique called pulsed NMR. Herefore the fat can first be stabilised or not. If the fat is not stabilised the solid fat content will be measured on a fat that was subjected to the following treatment 10 min at 60 oC, 60 min at 0 oC and 30 min at measurement temperature.
If however the fat is first stabilised the fat was first subjected to a temperature regime as follows: 10 min at 60 oC, 90 min at 0 oC, 40 hours at 26 oC, 90 min at 0 oC and 60 min at measurement temperature.
The parameter N25 (stab)/N25 (unstab) gives an indication of the non tempering nature of the fat. The closer this value is to 1 the better the non-tempering nature of the fat.
The N20 value gives information about the applicability of the fat at room temperature. Low N20 values would make the coatings unsuitable at room temperature.
The N35 value is important to obtain the required mouth feel.

Although the exact distribution of the fatty acid groups in the fats is not highly relevant we found that very good results could be obtained if this distribution was random in the fats. A random distribution has the advantage that during the preparation of the fats no expensive measures have to be taken in order to obtain directed fatty acid distributions.

Very useful sources for the preparation of our new fats are fatty acid compositions derived from hardened or unhardened high oleic sunflower oil, high oleic soybean oil,high oleic rape seed oil, high lauric rape seed oil, cotton seed oil, or soybean oil, or rape seed oil. A very useful fat is obtained as the mid fraction of the wet fractionation of an interesterified mix of hardened soybean oil or hardened cotton seed oil, preferably hardened to IV < 1, hardened palm kernel stearine or hardened high lauric rape seed oil, and a liquid oil such as high oleic sunflower oil. A typical fat obtained from these sources has the following N-profile and fatty acid composition measured by FAME analysis.

| FAME | | N(stab) | | N(unstab) |
|---|---|---|---|---|
| FA | % | at T indicated | | at T indicated |
| C12 | 17 | N20 | 70 | 79 |
| C16 | 10 | N25 | 62 | 63 |
| C18 | 39 | N30 | 48 | 40 |
| C18:1 | 21 | N35 | 22 | 10 |
| | | N40 | 2 | 0 |

Our new fats are also very good components for confectionery fillings, and in particular for bakery and confectionery applications where the avoidance of a tempering treatment is a great advantage.

### EXAMPLES

A feedstock was made by fully interesterifying ( with Na-methylate) a blend consisting of 30 wt% fully hardened BO, 33 wt% fully hardened Palm kernel stearin and 37 wt% high oleic Sunflower oil.
400 g of the feedstock was dissolved in 2800 ml warm aceton (50°C).
A mid fraction was made by fractionation at 0°C, followed by fractionation of the insoluble part at + 26°C. (Oil : Acetone 1:5 w/v)
A mid fraction was obtained at 38 % yield.
This fat had the N-line as mentioned earlier and the

| | | | |
|---|---|---|---|
| fatty acid pattern | C12 | = 17% | |
| | C16 | = 10% | |
| | C18 | = 39% | |
| | C18:1 | = 21% | trans-content: < 2% |

### Example 2

A second feedstock was made by fully interesterifying (with Na-methylate) a blend consisting of 50 wt% fully hardened HLRP, 10 wt% fully hardened CS and 40 wt% HOSF. A double wet fractionation in aceton at 0°C and + 26°C resulted in a mid fraction with the desired properties:

| unstab | | stab | | |
|---|---|---|---|---|
| N20 | 77 | 70 | C12 = 17% | |
| N25 | 64 | 63 | C16 = 11% | |
| N30 | 38 | 46 | C18 = 38% | |
| N35 | 12 | 23 | C18:1 = 21% | trans-content: < 2% |

### Example 3

Example 2 was repeated, however applying as starting mixture 50 wt% fully hardened HLRP, 20 wt% partly hardened CS and 30 wt% HOSF. The product obtained as midfraction had the following properties:

| | unstab | stab | FAME |
|---|---|---|---|
| N20 | 78 | 68 | C12 = 19% |
| N25 | 63 | 61 | C16 = 10% |
| N30 | 41 | 47 | C18 = 37% |
| N35 | 11 | 19 | C18:1= 29% |
| | | | trans-content: 10% |

### Use of the non-temper fat in coatings

The following coating recipe was used:

| | wt% |
|---|---|
| CCP 10/12 | 20 |
| fat | 32 |
| sugar | 48 |
| lecithin | 0.4 |

A coating with good properties was made with the fats according to examples 1 to 3.

## Claims

1. Non-temper, low lauric fat blends suitable for confectionery coatings comprising saturated and mono unsaturated fatty acid residues, wherein the blends comprise:
10-30 wt% of C12:0 and/or C14:0 fatty acids, preferably 12-25 wt%, most preferably 14-20 wt%
20-80 wt% of total (C16:0+C18:0) fatty acids, preferably 30-60 wt%, most preferably 40-55 wt%
10-50 wt% of C18:1 fatty acid, preferably 15-35 wt%,
while the ratio C18:0/C16:0 fatty acids in the blend ranges from 2-7, preferably from 3-5

2. Non-temper, low lauric fat blend according to claim 1, wherein the blend displays a solid fat content at the temperature indicated as measured by NMR-pulse of:
N20 (non stab) > 50, preferably > 60, most preferably > 65
N35 (non stab) < 20, preferably < 15, most preferably < 10,
while the ratio between N25 (stab) and N25 (non stab) ranges from 0.7-2.0, preferably from 0.8-1.5, most preferably from 0.9-1.2.

3. Fat blends according to claims 1 or 2, wherein the fatty acid groups present in the blends are randomly distributed.

4. Fat blends according to claims 1-3 wherein the fatty acids present in the blends are derived from non-tropical fat sources selected from the group consisting of: hardened or unhardened HOSF, high oleic soybean oil, high oleic rapeseed oil, high lauric rape seed oil, cotton seed oil, or soybean oil, or rape seed oil.

5. Coatings for confectionery products wherein the coating comprises a fat blend according to claims 1-4.

6. Coated confectionery products, wherein the coating is a coating according to claim 5.

## Patentansprüche

1. Nicht-temperierte, laurinarme Fettmischungen mit Eignung für Konfektbeschichtungen, umfassend gesättigte und mono-ungesättigte Fettsäure-Reste, wobei die Mischungen umfassen:
10-30 Gew.-% C12:0- und/oder C14:0-Fettsäuren, vorzugsweise 12-25 Gew.-%, insbesondere 14-20 Gew.-%,
20-80 Gew.-% Gesamt (C16:0 + C18:0)-Fettsäuren, vorzugsweise 30-60 Gew.-%, insbesondere 40-55 Gew.-%,
10-50 Gew.-% C18:1-Fettsäure, vorzugsweise 15-35 Gew.-%,
wobei das Verhältnis C18:0- / C16:0-Fettsäuren in der Mischung zwischen 2-7, vorzugsweise zwischen 3-5, liegt.

2. Nicht-temperierte, laurinarme Fettmischung gemäß Anspruch 1, wobei die Mischung bei der angezeigten Temperatur, gemessen nach dem NMR-Impuls, einen Festfett-Gehalt zeigt von:
N20 (nicht stab.) > 50, vorzugsweise > 60, insbesondere > 65,
N35 (nicht stab.) < 20, vorzugsweise < 15, insbesondere < 10,
während das Verhältnis zwischen N25 (stab.) und N25 (nicht stab.) von 0,7-2,0, vorzugsweise von 0,8-1,5 und insbesondere von 0,9-1,2, schwankt.

3. Fettmischungen nach Anspruch 1 oder 2, wobei die Fettsäure-Gruppen in den Mischungen statistisch verteilt sind.

4. Fettmischungen nach Anspruch 1 bis 3, wobei die Fettsäuren, die in den Mischungen vorliegen, von nicht-tropischen Fettausgangsmaterialien abgeleitet sind, ausgewählt aus der aus gehärtete oder ungehärtetem oleinreichem Sonnenblumenöl, oleinreichem Sojabohnenöl, oleinreichem Rapsöl, laurinreichem Rapsöl, Baumwollsamenöl oder Sojabohnenöl oder Rapsöl bestehenden Gruppe ausgewählt ist.

5. Beschichtungen für Konfektprodukte, wobei die Beschichtung eine Fettmischung gemäß den Ansprüchen 1 bis 4 enthält.

6. Beschichteten Konfektprodukte, wobei die Beschichtung eine Beschichtung gemäß Anspruch 5 ist.

## Revendications

1. Mélanges de graisses non-tempérées à faible teneur en acide laurique, pour des enrobages pour la confiserie, comprenant des résidus d'acides gras saturés et mono-insaturés, lesquels mélanges comprennent :
10 % à 30 % en poids d'acides gras en C12:0 et/ou en C14:0, de préférence de 12 % à 25 % en poids, le plus préférablement de 14 % à 20 % en poids.
20 % à 80 % en poids de l'ensemble des acides gras (C16:0 + C18:0), de préférence de 30 % à 60 % en poids, le plus préférablement de 40 % à 55 % en poids.
10 % à 50 % en poids d'acides gras en C18:1, de préférence de 15 % à 35 % en poids,
tant que le rapport des acides gras C18:0/C16:0 dans le mélange s'étend de 2 à 7, de préférence de 3 à 5.

2. Mélange de graisses non-tempérées à faible teneur en acide laurique selon la revendication 1, lequel mélange présente une teneur en graisse solide à une température indiquée, mesurée par impulsion RMN, de :
N20 (non-stabilisé) > 50, de préférence > 60, le plus préférablement > 65,
N35 (non-stabilisé) < 20, de préférence < 15, le plus préférablement < 10,
tant que le rapport entre N25 (stabilisé) et N25 (non-stabilisé) s'étend de 0,7 à 2,0 , de préférence de 0,8 à 1,5 , le plus préférablement de 0,9 à 1,2.

3. Mélanges de graisses selon les revendications 1 ou 2, dans lesquels les groupes d'acides gras présents dans les mélanges sont distribués aléatoirement.

4. Mélanges de graisses selon les revendications 1 à 3, dans lesquels les acides gras présents dans les mélanges sont dérivés de sources de graisses non-tropicales choisies dans le groupe composé du : HOSF durci ou non durci, de l'huile de soja à haute teneur en acide oléique, de l'huile de colza à haute teneur en acide oléique, de l'huile de colza à haute teneur en acide laurique, de l'huile de coton, de l'huile de soja, ou de l'huile de colza.

5. Enrobages pour des produits de confiserie dans lequel l'enrobage comprend un mélange de graisses selon les revendications 1 à 4.

6. Produits de confiserie enrobés dans lesquels l'enrobage est un enrobage selon la revendication 5.
